# EUROPEAN PATENT SPECIFICATION

(11) **EP 4 296 086 B1**
(45) Date of publication and mention of the grant of the patent: **30.07.2025**
(21) Application number: 23179875.2
(22) Date of filing: 16.06.2023
(51) Int. Cl.: B60C 7/14, B29C 64/118, B22F 10/18, B33Y 70/10, B33Y 80/00

(54) **PROCESS FOR PRODUCING NON-PNEUMATIC TIRES**
VERFAHREN ZUR HERSTELLUNG LUFTLOSER REIFEN
PROCÉDÉ DE FABRICATION DE PNEUS NON PNEUMATIQUES

(30) Priority: 20.06.2022 US 202217807776
(43) Date of publication of application: 27.12.2023
(73) Proprietor: The Goodyear Tire & Rubber Company, Akron, OH 44316 (US)
(72) Inventor: BOES, Claude Ernest Felix, 9147 Erpeldange (LU); SPORTELLI, Francesco, 3249 Bettembourg (LU)
(74) Representative: Kutsch, Bernd

(56) References cited:
- WO-A1-2020/197707
- CN-A- 113 291 100
- CN-A- 113 493 603
- DE-A1- 102017 124 353
- US-A1- 2018 001 704
- US-A1- 2018 029 419
- US-A1- 2021 276 367
- RYOSUKE MATSUZAKI ET AL: "Three-dimensional printing of continuous-fiber composites by in-nozzle impregnation", SCIENTIFIC REPORTS, vol. 6, no. 1, 11 March 2016 (2016-03-11), XP055466746, DOI: 10.1038/srep23058
- FRANK VAN DER KLIFT ET AL: "3D Printing of Continuous Carbon Fibre Reinforced Thermo-Plastic (CFRTP) Tensile Test Specimens", OPEN JOURNAL OF COMPOSITE MATERIALS, vol. 06, no. 01, 1 January 2016 (2016-01-01), pages 18 - 27, XP055696632, ISSN: 2164-5612, DOI: 10.4236/ojcm.2016.61003

## Description

### Field of the Invention

The invention relates to a process for producing tires, such as non-pneumatic tires, and in particular to a process for the production of at least a part of a non-pneumatic tire structure by additive manufacturing using continuous fibers.

### Background of the Invention

Pneumatic tires are efficient at carrying loads because the whole tire structure is involved in carrying the load. Pneumatic tires are also desirable because they have low contact pressure, resulting in lower wear on roads due to the distribution of the load of the vehicle. Pneumatic tires have also low stiffness, which ensures a comfortable ride in a vehicle. The primary drawback of a pneumatic tire is that it requires compressed gas. A conventional pneumatic tire is rendered useless after a complete loss of inflation pressure or has at least an increased rolling resistance at low inflation pressures.

A tire designed to operate without inflation pressure may eliminate many of the problems and compromises associated with a pneumatic tire. Neither pressure maintenance nor pressure monitoring is required. In a non-pneumatic tire, spokes are often provided between a tread and a wheel similar to the function of the air pressure of the conventional pneumatic tire. The structure and the shape of the spokes are important factors that determine the driving performance and/or rolling resistance of the non-pneumatic tire.

US 10,538,130 B2 describes a non-pneumatic tire with a band part which includes an inner band and an outer band that is separated from the inner band and surrounds an outer peripheral surface of the inner band and a spoke part extending in a circumferential direction between the inner band and the outer band, having a circumferential cross-section having one or more holes, wherein the spoke part further comprises a first spoke and a second spoke of special shapes. The inner band, the outer band, the first spokes, and the second spokes may form a single continuous member. The single continuous member may be manufactured by using a 3D printer.

US 2021/276367 A1 describes a process in accordance with the preamble of claim 1.

CN 113 291 100 A and US 2018/001704 A1 describe a process of the production of a fiber reinforced branched spoke of a non-pnuematic tire.

### Summary of the Invention

The invention relates to a process in accordance with claim 1.

Dependent claims refer to preferred embodiments of the invention.

One or more of the above dicssused needs can be fulfilled by the present invention wherein a non-pneumatic tire structure or at least a part of a non-pneumatic tire structure such as one or more spokes is produced by additive manufacturing using one or more 3D-printers and at least one plastic composition comprising a continuous fibercoated with a thermoplastic resin.

According to a first aspect, the invention is directed to a process for the production of at least a part of a non-pneumatic tire structure, the non-pneumatic tire structure comprising an inner band, an outer band surrounding the inner band and a spoke part comprising a plurality of spokes extending between the inner band and the outer band, wherein the process further comprises the steps of:
- providing a first plastic composition in the form of a filament comprising a continuous fiber coated with a first thermoplastic resin; and
- forming one or more selected from at least one spoke of (one or more spokes of) the plurality of spokes, the inner band and the outer band of the non-pneumatic tire structure by 3D printing, wherein forming includes depositing layers of the first plastic composition.

For example, the invention provides a production process of at least a part of a non-pneumatic tire structure, the non-pneumatic tire structure comprising one or more of:
- an axial direction,
- an angular section,
- a radial section,
- an inner band,
- an outer band surrounding the inner band and
- a spoke part comprising a plurality of spokes projecting from the inner band to the outer band of a non-pneumatic tire structure,
wherein the process comprises the steps of:
- providing a first plastic composition, preferably in the form of a filament comprising a continuous fiber, more preferably coated with a first thermoplastic resin,
- providing a second plastic composition, optionally selected from an unreinforced plastic, a short-fiber reinforced thermoplastic resin, a long-fiber reinforced thermoplastic resin, or a fiber reinforced thermoplastic resin, and
- forming the branched spoke by 3D printing including depositing layers,
   wherein each of said layers comprises a first portion of the first plastic composition and one or more second portions of the second plastic composition, and
   wherein at least one of the radial section and the angular section exhibits an axial alternation of the first layer portions and second layer portions.

According to a preferred aspect, the invention is directed to a process for the production of a branched spoke of a non-pneumatic tire structure, wherein the branched spoke is intended to be placed between an inner band and an outer band, wherein the branched spoke has a branched shape with a knot section and a plurality of webs. At least one web of the plurality of webs extends from said knot section towards the inner band, and at least two webs of the plurality of webs extend from said knot section towards the outer band, wherein the process comprises the steps of:
- providing a first plastic composition in the form of a filament comprising a continuous fiber coated with a first thermoplastic resin,
- providing a second plastic composition selected from an unreinforced plastic, a short-fibers reinforced thermoplastic resin, a long-fibers reinforced thermoplastic resin, or a fiber reinforced thermoplastic resin, and
- forming the branched spoke of the non-pneumatic tire structure by 3D printing, including depositing layers of the plastic composition, wherein forming forming the branched spoke of the non-pneumatic tire includes depositing layers from the first plastic composition defining bypassed areas and, for each layer, filling the bypassed areas by depositing the second plastic composition in the bypassed areas, and wherein the bypassed areas comprising the second plastic composition are located at least on one web so that at least one web of the plurality of webs exhibits an alternation of layers of the first plastic composition and the second plastic composition.

For example, the invention provides for a production process of a branched spoke of a non-pneumatic tire structure, wherein the branched spoke is intended to be placed between an inner band and an outer band, wherein the branched spoke comprises:
- a branched shape, said branched shape having one or more of:
   ∘ an axial direction,
   ∘ a knot section, and
   ∘ a plurality of webs,
      at least one web of the plurality of webs extending from said knot section towards the inner band, and at least two webs of the plurality of webs extending from said knot section towards the outer band;

wherein the process further comprises:
   - providing a first plastic composition, preferably in the form of a filament comprising a continuous fiber, more preferably coated with a first thermoplastic resin,
   - providing a second plastic composition optionally selected from an unreinforced plastic, a short-fiber reinforced thermoplastic resin, a long-fiber reinforced thermoplastic resin, or a fiber reinforced thermoplastic resin, and
   - forming the branched spoke by 3D printing including depositing layers,
wherein each of said layers comprises a first layer portion of the first plastic composition and a second layer portion of the second plastic composition, and
wherein the first layer portions and the second layer portions axially alternate in at least one web.

According to a second preferred aspect, the invention is directed to a process for the production of at least a part of a non-pneumatic tire structure, the non-pneumatic tire structure comprising an inner band, an outer band surrounding the inner band, and a spoke part comprising a plurality of spokes extending between the inner band and the outer band, wherein the process comprises the step of:
- providing a 3-D printer, optionally with a heated nozzle;
- providing a continuous fiber;
- providing a first thermoplastic resin;
- coating the continuous fiber with the first thermoplastic material in the (optionally heated) nozzle of the 3-D printer to produce a first plastic composition in the form of a filament comprising the continuous fiber coated with the first thermoplastic resin; and
- forming one or more selected from one or more spokes of the plurality of spokes, the inner band and the outer band of the non-pneumatic tire structure by 3D printing, wherein forming includes depositing layers of the first plastic composition.

In a preferred aspect of the invention, the continuous fiber of the first plastic composition is selected from one or more cords, one or more yarns, one or more single filaments, or combinations thereof.

In a preferred aspect of the invention, the first thermoplastic resin is selected from polyether ether ketone, polysulfone, polyether sulfone, polyether imide, polyamide, polybutylene terephthalate, polyethylene, polycarbonate, thermoplastic polyurethane, or combinations thereof; and wherein the continuous fiber has a diameter ranging from 5 to 10 µm and is selected from a carbon fiber or a glass yarn.

The following can be used to further define the process according to the first aspect, the second aspect, or the third aspect:
In a preferred embodiment, at least a part of a non-pneumatic tire structure is one or more spokes.

In another preferred embodiment, at least a part of a non-pneumatic tire structure is one or more spokes and the inner band, with preference, the inner band being a hub. In another embodiment, at least a part of a non-pneumatic tire structure is one or more spokes and the outer band, with preference, the inner band being a shear band. In a further embodiment, at least a part of a non-pneumatic tire structure is one or more spokes, the inner band and the outer band. For example, the process is a process for the production of a non-pneumatic tire structure (in particular, the whole non-pneumatic tire structure).

In a preferred embodiment, one or more layers of the first plastic composition extend from at least one spoke of the plurality of spokes to the inner band and/or the outer band, or from the inner band to at least one spoke of the plurality of spokes and the outer band, or within two different spokes of the plurality of spokes.

In a preferred embodiment, the thermoplastic resin of the first plastic composition comprises a polymer selected from the group comprising polyoxymethylene, acrylonitrile butadiene styrene, polyamide, polyether ether ketone, cellulose acetate, cellulose acetate propionate, polylactic acid, polyethylene terephthalate, polyethylene terephthalate glycol, polymethylmethacrylate, polypropylene, polystyrene, polyvinyl chloride, polychloroethene, polyester resin, polycarbonate, thermoplastic polyurethane, polyether sulfone, poly(vinyl alcohol), polyphenyl sulfone, polyetherimide, polyethylene, or combinations thereof.

If present, the thermoplastic resin of the second plastic composition can be of the same nature or type as the thermoplastic resin of the first plastic composition. So, for example, the thermoplastic resin of the first plastic composition and the second plastic composition comprises the same polymer, wherein the polymer is selected from the group comprising polyoxymethylene, acrylonitrile butadiene styrene, polyamide, polyether ether ketone, cellulose acetate, cellulose acetate propionate, polylactic acid, polyethylene terephthalate, polyethylene terephthalate glycol, polymethylmethacrylate, polypropylene, polystyrene, polyvinyl chloride, polychloroethene, polyester resin, polycarbonate, thermoplastic polyurethane, polyether sulfone, poly(vinyl alcohol), polyphenyl sulfone, polyetherimide, polyethylene, or combinations thereof.

For example, the continuous fiber of the first plastic composition is selected from one or more glass fibers, one or more metallic fibers, one or more carbon fibers, one or more thermoplastic polymers fibers having a melting point above 300°C according to ISO 3146:2000, or combinations thereof; wherein the one or more thermoplastic polymers fibers having a melting point above 300°C according to ISO 3146:2000, if any, have a melting point according to ISO 3146:2000 that is higher than the melting point of the first thermoplastic resin by at least 20°C.

For example, the continuous fiber of the first plastic composition is selected from one or more cords, one or more yarns, one or more single filaments, or combinations thereof.

For example, the first thermoplastic resin is selected from polyether ether ketone, polysulfone, polyether sulfone, polyether imide, polyamide, polybutylene terephthalate, polyethylene, polycarbonate, thermoplastic polyurethane, or combinations thereof; and/or the continuous fiber has a diameter ranging from 5 to 10 µm and is optionally selected from a carbon fiber or a glass yarn.

For example, the first thermoplastic resin of the first plastic composition is made of or comprises polyamide, thermoplastic polyurethane, or combinations thereof; and/or the continuous fiber of the first plastic composition has a diameter ranging from 5 to 10 µm and is optionally selected from a carbon fiber or a glass yarn.

For example, the second plastic composition is an unreinforced plastic, the first thermoplastic resin and the second thermoplastic resins are the same and are selected from polyether ether ketone, polysulfone, polyether sulfone, polyether imide, polyamide, polybutylene terephthalate, polyethylene, polycarbonate, thermoplastic polyurethane, or combinations thereof; and the continuous fiber is selected from a glass yarn or a carbon fiber.

In a preferred embodiment, forming a plurality of spokes comprises defining a bypassed area in the layer of the first plastic composition and further comprises:
- providing a second plastic composition selected from an unreinforced plastic, a short-fibers reinforced thermoplastic resin, a long-fibers reinforced thermoplastic resin, or a fibers reinforced thermoplastic resin, and
- filling the bypassed area by depositing the second plastic composition in said bypassed area.

In a preferred embodiment, in which one or more spokes of the plurality of spokes have a branched shape, said branched shape has a knot section and a plurality of webs, the plurality of webs comprising at least one inner web extending from said knot section towards the inner band, and at least two outer webs extending from said knot section towards the outer band. The areas bypassed by the first plastic composition and filled by the second plastic composition are located at least on one web so that at least one web of the plurality of webs has alternating layers of the first plastic composition and the second plastic composition.

For example, one or more spokes of the plurality of spokes have a branched shape; said branched shape has a knot section and a plurality of webs, the plurality of webs comprising at least one inner web extending from said knot section towards the inner band, and at least two outer webs extending from said knot section towards the outer band. The layers comprise a first layer and a second layer stacked on the first layer, wherein the bypassed area is located at least at the inner web in the first layer, and the bypassed area is located at least at the outer web in the outer layer, and at least one web of the plurality of webs has alternating layers of the first plastic composition and the second plastic composition.

Preferably, one or more spokes of the plurality of spokes have a branched shape. Said branched shape has a knot section and a plurality of webs extending from the knot section. Within at least one or each of the webs, the layers exhibit an alternation of the first plastic composition and the second plastic composition.

For example, the process further comprises interrupting the deposit of the second plastic composition at the knot section so that the knot section is formed from layers of the first plastic composition which are touching one another, and/or so that the knot section exhibits an axial continuity of the first plastic composition.

For example, the alternating layers overlap in an axial direction of the non-pneumatic tire structure.

For example, each web of the plurality of webs has a straight shape or a curved shape or a double-curved shape.

For example, the branched spoke is X-shaped and comprises an inner link joining the ends of the inner webs and an outer link joining the end of the outer webs; or the branched spoke is Y-shaped and comprises an outer link joining the ends of the outer webs.

For example, the branched spoke is X-shaped and comprises an inner link joining the inner ends of the webs of the plurality of webs which are adjacent to the inner band, and an outer link joining the outer ends of the webs of the plurality of webs which are adjacent to the outer band. Alternatively, the branched spoke is Y-shaped and comprises an outer link joining outer ends of the webs of the plurality of webs which are adjacent to the outer band.

**In** a preferred embodiment, the spokes have one of a straight shape, a curved shape, a double-curved shape, or any combination thereof, and wherein the bypassed areas filled by the second plastic composition are located at least on the inner band or the outer band or both the inner band and the outer band, so that at least one of the inner band and the outer band has alternating layers of the first plastic composition and the second plastic composition.

For example, at least one selected from the inner band and the outer band comprises the first and the second thermoplastic compositions deposited or arranged so as to exhibit a checkerboard pattern.

In a preferred embodiment, the first plastic composition is formed in situ so that the step of providing a first plastic composition in the form of a filament comprises:
- providing a 3-D printer with a preferably heated nozzle;
- providing a continuous fiber;
- providing a first thermoplastic resin; and
- coating the continuous fiber with the first thermoplastic material in the preferably heated nozzle of the 3-D printer to produce a first plastic composition in the form of a filament comprising the continuous fiber coated with the first thermoplastic resin.

According to a fourth preferred aspect, the invention is directed to a non-pneumatic tire structure comprising an inner band, an outer band surrounding the inner band and a spoke part comprising a plurality of spokes extending between the inner band and the outer band, wherein at least one spoke comprises a continuous reinforcement fiber embedded in a first thermoplastic resin that extends from said spoke to one or more selected from the inner band, the outer band, one or more other spokes, or any combination thereof.

For example, the non-pneumatic tire structure is a spoked ring.

In a preferred embodiment, the spokes have a straight shape, a curved shape, a double-curved shape, or any combination thereof. At least one of the inner band or the outer band has alternating layers of the first plastic composition and the second plastic composition. For example, at least one of the inner band or the outer band has a checkerboard pattern made of the first plastic composition and the second plastic composition.

In a preferred embodiment, the direction is perpendicular to the radial direction, or with a fixed angle, or with varying angles with respect to the radial direction, and/or with a fixed angle, or with varying angles with respect to the axial direction.

In a preferred embodiment, the spokes have a branched shape. Said branched shape has a knot section and a plurality of webs, at least one web of the plurality of webs extending from said knot section towards the inner band, and at least two webs of the plurality of webs extending from said knot section towards the outer band. At least one web of the plurality of webs has alternating layers of the first plastic composition and the second plastic composition.

For example, the alternating layers overlap in the axial direction of the non-pneumatic tire structure.

For example, each web of the plurality of webs has a straight shape or a curved shape or a double-curved shape.

For example, the non-pneumatic tire structure is produced by 3D-printing according to the process described in the first or the third aspect.

According to a fifth preferred aspect, the invention comprises a branched spoke of a non-pneumatic tire structure, wherein the spoke is intended to be placed between the inner band and the outer band, and wherein the spoke has a branched shape, said branched shape having a knot section and a plurality of webs. At least one web of the plurality of webs extends from said knot section towards the inner band, and at least two webs of the plurality of webs extend from said knot section towards the outer band. At least one web of the plurality of webs has alternating layers of the first plastic composition and the second plastic composition.

For example, the branched spoke is X-shaped and comprises an inner link joining the ends of the inner webs and an outer link joining the end of the outer webs. Alternatively, the branched spoke is Y-shaped and comprises an outer link joining the ends of the outer webs.

For example, the branched spoke is produced by 3D printing according to the process described in the first, the second or the third aspect.

The following can be used to further define the non-pneumatic tire structure or the branched spoke.

For example, the first thermoplastic resin of the first plastic composition and/or the second thermoplastic resin of the second plastic composition comprises a polymer selected from the group comprising polyoxymethylene, acrylonitrile butadiene styrene, polyamide, polyether ether ketone, cellulose acetate, cellulose acetate propionate, polylactic acid, polyethylene terephthalate, polyethylene terephthalate glycol, polymethylmethacrylate, polypropylene, polystyrene, polyvinyl chloride, polychloroethene, polyester resin, polycarbonate, thermoplastic polyurethane, polyether sulfone, poly-(vinyl alcohol), polyphenyl sulfone, polyetherimide, polyethylene, or combinations thereof.

For example, the first thermoplastic resin and the second thermoplastic resin are the same.

In an embodiment, the continuous fiber of the first plastic composition is selected from one or more glass fibers, one or more metallic fibers, one or more carbon fibers, one or more thermoplastic polymers fibers having a melting point above 300°C according to ISO 3146:2000, or combinations thereof, wherein the one or more thermoplastic polymers fibers having a melting point above 300°C according to ISO 3146:2000, if any, have a melting point according to ISO 3146:2000 that is higher than the melting point of the first thermoplastic resin by at least 20°C.

For example, the continuous fiber of the first plastic composition is selected from one or more glass fibers, one or more metallic fibers, one or more carbon fibers, one or more polyetherimide fibers, one more polyether ether ketone fibers, or combinations thereof.

For example, the continuous fiber of the first plastic composition is selected from one or more cords, one or more yarns, one or more single filaments, or combinations thereof.

In an embodiment, the inner band and the outer band are essentially concentric to each other.

In another embodiment, the outer band circumferentially surrounds the inner band, in particular radially spaced apart.

In another embodiment, each of the inner band and the outer band are closed and/or have each a ring shape or tube shape.

In another embodiment, the inner band and the outer band are concentrically arranged about the axis of the tire or the axial direction.

In another embodiment, the plurality of spokes is circumferentially arranged about the inner band so as to (resiliently) connect the (radially) inner band to the (radially) outer band.

In another aspect, the present invention is directed to a non-pneumatic tire, such as a passenger car tire or truck tire. The tire may have the features and/or may be made in accordance with the aforementioned aspects.

### Definitions

The terms "comprising", "comprises" and "comprised of" as used herein are synonymous with "including", "includes" or "containing", "contains", and are inclusive or open-ended and do not exclude additional, non-recited members, elements or method steps. The terms "comprising", "comprises" and "comprised of" also include the term "consisting of".

The recitation of numerical ranges by endpoints includes all integer numbers and, where appropriate, fractions subsumed within that range (e.g., 1 to 5 includes 1, 2, 3, 4 and 5 when referring to, for example, a number of elements, and can also include 1.5, 2, 2.75 and 3.80, when referring to, for example, measurements). The recitation of endpoints also includes the recited endpoint values themselves (e.g., from 1.0 to 5.0 includes both 1.0 and 5.0). Any numerical range recited herein is intended to include all sub-ranges subsumed therein.

The reference throughout this specification to "one embodiment" or "an embodiment" means that a particular feature, structure or characteristic described in connection with the embodiment is included in at least one embodiment of the present disclosure. The particular features, structures, characteristics or embodiments may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the disclosure and form different embodiments, as would be understood by those in the art.

Unless otherwise defined, all terms used in the disclosure, including technical and scientific terms, have the meaning as commonly understood by one skilled in the art to which this disclosure belongs. By means of further guidance, definitions for the terms used in the description are included to better appreciate the teaching of the present disclosure.

"Axial" means lines or directions that are parallel to the axis of rotation of the tire.

In the disclosure, "3D printing" and "three-dimensional printing" are used as synonymous. In the same way, "3D printer" and "three-dimensional printer" are used as synonymous.

In the disclosure "yarn" and "filament" are used as synonymous.

### Brief Description of the Drawings

The invention will be described by way of example and with reference to the accompanying drawings in which:
FIG. 1 represents a composite structure of a non-pneumatic tire;
FIG. 2 is a partial perspective view of a non-pneumatique tire according to an embodiment of the invention;
FIG. 3 are two views of a non-pneumatique tire according to the embodiments of the invention with branched spokes;
FIG. 4 is a representation of an X-shaped spoke according to an embodiment of the invention;
FIG. 5 is a representation of a Y-shaped spoke according to another embodiment of the invention;
FIG. 6a and FIG 6b illustrate a U-shaped layout to print a spoke part wherein the spokes are straight;
FIG. 7 illustrates a crossing layout to print a spoke part, wherein the spokes have a branched shape, such as an X-shape;
FIG. 8 illustrates alternating portions of the first and second plastic compositions between the different layers;
FIG. 9 illustrates a spoked ring comprising an inner band, an outer band surrounding the inner band and a spoke part comprising a plurality of spokes extending between the inner band and the outer band wherein the spokes are X-shaped; and
FIG. 10 illustrates the results of the dynamic crush tests.

### Detailed Description of Preferred Embodiments of the Invention

The following is an explanation of a process according to an embodiment of the invention for the production of at least a part of a non-pneumatic tire structure or the whole non-pneumatic tire structure. The non-pneumatic tire structure comprises at least a hub, a shear band and a spoke section comprising a plurality of spokes. With preference, the process for the production of at least a part of a non-pneumatic tire structure comprises the production of one or more spokes. In an embodiment, the spokes are linked or integral with an inner band and/or an outer band surrounding the inner band, wherein the plurality of spokes extends between the inner and the outer band. The inner band can be the hub of the non-pneumatic tire structure or can be different from said hub. Similarly, the outer band can be the shear band of the non-pneumatic tire structure or can be different from the said shear band. The present invention is also related to spokes, to parts of non-pneumatic tire structures, and to non-pneumatic tire structures produced according to said process. The non-pneumatic tire structures of the invention can be integrally produced by said process or can be partially produced by such a process. This can be the case when the non-pneumatic tire structure comprises different parts assembled together.

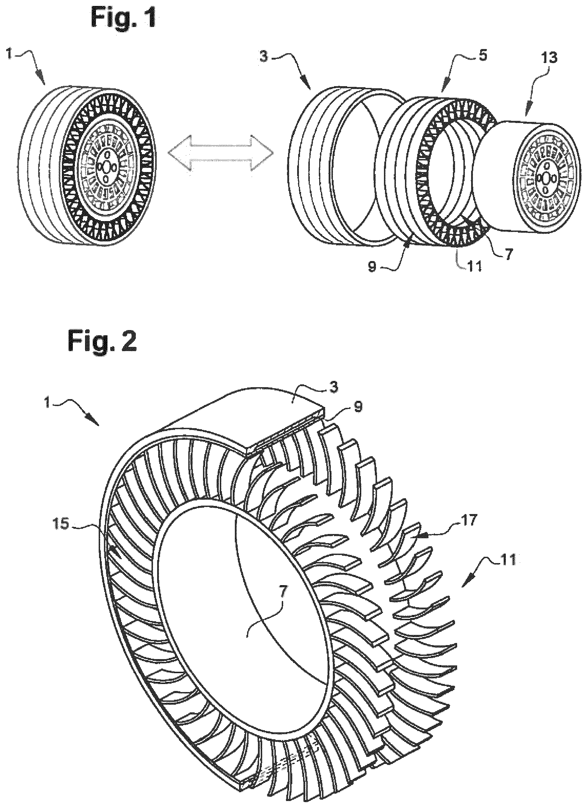

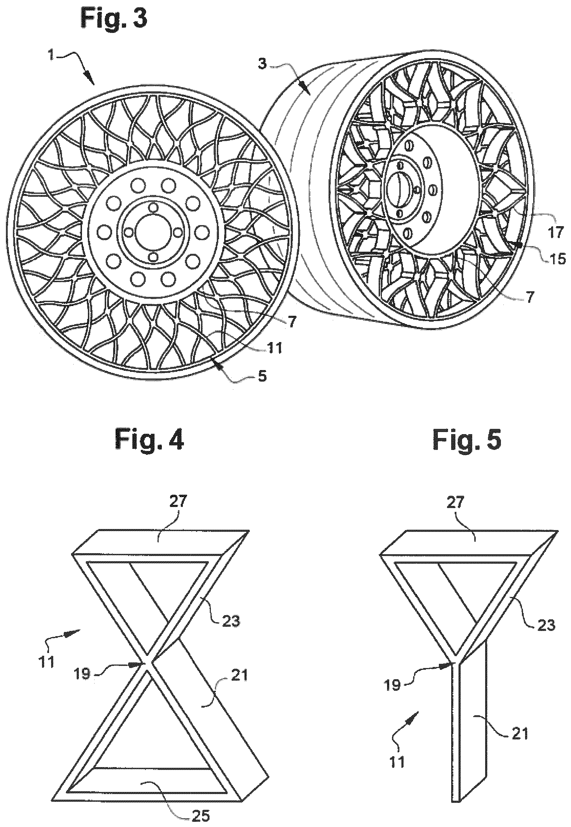

Reference is now made to FIG. 1 which illustrates a non-pneumatic tire. Typically, a non-pneumatic tire 1 is or comprises a composite structure comprising a shear band 3, a connecting spoke part 5 and a rim 13. In FIG. 1, the connecting spoke part comprises an inner band 7, an outer band 9 and a plurality of spokes 11 extending between the inner band 7 and the outer band 9. For example, the connecting spoke part 5 is a monobloc. The inner band 7 is wrapped in the outer band 9. FIGS. 2 and 3 illustrate examples of non-pneumatic tire structures. In FIG. 2, the plurality of spokes 11 are arranged in two annular rows (a first row 15 and a second row 17) succeeding one another in the axial direction and that extend between the inner band 7 and the outer band 9. The spokes on each row are curved. The shear band 3 is placed on the outer band 9. The rim is not illustrated but would be surrounded by the inner band 7. In FIG. 3, the plurality of spokes 11 are arranged in two rows (a first row 15 and a second row 17) succeeding one another in the axial direction and that extend between the inner band 7 and the outer band 9. The spokes 11 have a branched shape, in particular, in this example, an X-shape. These two figures are given for an illustrative purpose and do not intend to limit the invention.

FIGS. 4 and 5 illustrate spokes 11 with a branched shape. According to the invention, said branched shape has a knot section 19 and a plurality of webs 21, 23, wherein at least one web 21 of the plurality of webs is intended to extend from said knot section towards the inner band (also named the inner webs 21 hereinafter), and at least two webs 23 of the plurality of webs are intended to extend from said knot section towards the outer band (also named the outer webs 23 hereinafter). Each web of the plurality of webs can have a straight shape, a curved shape, or a double curved shape. In FIG. 4, the branched spoke 11 is X-shaped and comprises an inner link 25 joining the ends of the inner webs 21 and an outer link 27 joining the ends of the outer webs 23. In FIG. 5, the branched spoke 11 is Y-shaped and comprises an outer link 27 joining the ends of the outer webs 23. The outer links can be integral to the outer band or different from the outer band. Similarly, the inner links can be integral to the inner band or different from the inner band.

In an embodiment, the invention is directed to a process for the production of at least a part of a non-pneumatic tire structure, the non-pneumatic tire structure comprising an inner band, an outer band surrounding the inner band and a spoke part comprising a plurality of spokes extending between the inner band and the outer band, wherein the process comprises steps of:
- providing a first plastic composition in the form of a filament comprising a continuous fiber coated with a first thermoplastic resin; and
- forming one or more selected from one or more spokes, the inner band and the outer band of the non-pneumatic tire structure by 3D printing including depositing layers from the first plastic composition.

The first plastic composition is a continuous fiber reinforced composite that is provided in the form of a filament wherein a continuous reinforcement fiber is embedded in a thermoplastic resin.

3D printing with continuous fibers as such is a technique known to the person skilled in the art and is not described herein in detail. For example, 3D-printing with continuous carbon fibers is reported in van der Klift, F., Koga, Y., Todoroki, A., Ueda, M., Hirano, Y. and Matsuzaki, R. (2016) in "3D Printing of Continuous Carbon Fiber Reinforced Thermo-Plastic (CFRTP) Tensile Test Specimens", Open Journal of Composite Materials, 6, 18-27.

Filament-based 3D printers, such as FFF printers, are known to the person skilled in the art and are commercially available. FFF printers comprise an extruder and a hotend. The extruder is driving the thermoplastic filament through the 3D printing system and is responsible for controlling the material feed into the hotend. The extruder typically comprises a stepper motor that activates gears, which in turn grip the filament and push it through the hotend and onto the print bed. The hotend is the component of a 3D printer that melts the filament for extrusion and helps to maintain a consistent and accurate temperature for successful prints. The hotend is responsible for melting and depositing material. The hotend typically comprises a guiding tube for the filament, a heating element, and a brass nozzle. The extruder will drive the filament through the hotend where it will be heated until molten and then further extruded through the nozzle and onto the print bed. Once heated, the nozzle also serves to decrease the filament diameter from the initial 1.75 or 3.00 mm to a diameter that may range from 0.2 to 0.4 mm, depending on the nozzle. For example, the initial filament diameter is 1.75 mm. When the filament is a continuous fiber reinforced composite, the continuous reinforcement fibers can be provided as such or produced in-situ in the nozzle of the 3D-printer.

Methods for production of such continuous fiber reinforced composites are known to the person skilled in the art and are not described herein in detail. For example, the continuous fiber reinforced composite can be produced by in-situ impregnation or in-nozzle impregnation. Such a process is described in Matsuzaki, R., Ueda, M., Namiki, M. et al. in "Three-dimensional printing of continuous-fiber composites by in-nozzle impregnation", Sci Rep 6, 23058 (2016) and in WO2020197707. In the in-nozzle or in-situ impregnation, a thermoplastic filament and a continuous fiber are separately supplied to the 3D printer and the fiber is impregnated with the thermoplastic material within the heated nozzle of the printer immediately before printing.

More than one reinforcing single-filament can be included during the manufacturing of the 3D-printing composite-filament, with the single filaments being geometrically separated. The section of the composite filament can have a circular, an oval, or a multi-angles section.

For example, the process further comprises the steps of producing the first thermoplastic composition. In such a case, the step of providing a first plastic composition in the form of a filament comprises:
- providing a 3-D printer, optionally with a heated nozzle;
- providing a continuous fiber;
- providing a first thermoplastic resin; and
- coating the continuous fiber with the first thermoplastic material in the optionally heated nozzle of the 3-D printer to produce a first plastic composition in the form of a filament comprising a continuous fiber coated with a first thermoplastic resin, and providing such a first plastic composition.

The process for the production of at least a part of a non-pneumatic tire structure, the non-pneumatic tire structure comprising an inner band, an outer band surrounding the inner band and a spoke part comprising a plurality of spokes extending between the inner band and the outer band can also comprise the steps of:
- providing a 3-D printer with an optionally heated nozzle;
- providing a continuous fiber;
- providing a first thermoplastic resin;
- coating the continuous fiber with the first thermoplastic material in the optionally heated nozzle of the 3-D printer to produce a first plastic composition in the form of a filament comprising continuous fiber coated with a first thermoplastic resin, and providing such a first plastic composition; and
- forming one or more selected from i) one or more spokes, ii) the inner band and iii) the outer band of the non-pneumatic tire structure by 3D printing, wherein forming includes depositing layers from the first plastic composition, and providing such a first plastic composition.

In particular, the continuous fiber is a reinforcement fiber. A preferred feature of the invention is that the same continuous fiber may extend from at least one spoke to the inner band, or from at least one spoke to the outer band, or from at least one spoke to both the inner band and the outer band, or from at least one spoke to one or more other spokes. Since the continuous fiber is deposited through layers of the first plastic composition, according to an embodiment of the invention, one or more layers of the first plastic composition extend from at least one spoke to the inner band, or from at least one spoke to the outer band, or from at least one spoke to both the inner band and the outer band, or from one spoke to one or more other spokes.

It is understood that the spokes can be produced individually from the first plastic composition or both the first plastic composition and at least one second plastic composition. However, the invention also encompasses the production of two or more spokes wherein the spokes are printed together so that the one or more continuous reinforcement fibers extend from one spoke to one or more other spokes without being interrupted. The continuous fiber, preferably a single continuous fiber, optionally spans the spokes, the inner band and the outer band. Also, the invention encompasses the production of the whole spoke part with the same continuous fibers so that the same continuous fibers extend from the inner band, the outer band and the plurality of spokes without being interrupted.

The continuous fibers can be of any type. Preferably, the continuous fiber of the first plastic composition is selected from one or more cords, one or more yarns, one or more single filaments or combinations thereof. For example, the continuous fiber is a single filament, or several geometrically separated filaments, or a single yarn or a single cord.

In an embodiment, the continuous fiber of the first plastic composition is selected from one or more glass fibers, one or more metallic fibers, one or more carbon fibers, one or more thermoplastic polymers fibers having a melting point above 300°C according to ISO 3146:2000, or combinations thereof. With preference, the one or more thermoplastic polymers fibers having a melting point above 300°C according to ISO 3146:2000, if any, have a melting point according to ISO 3146:2000 that is higher than the melting point of the first thermoplastic resin by at least 20°C.

In an embodiment, the continuous fiber of the first plastic composition is selected from one or more glass fibers, one or more metallic fibers, one or more carbon fibers, one or more polyetherimide fibers, one or more polyether ether ketone fibers, or combinations thereof.

In an embodiment, the continuous fiber of the first plastic composition is selected from one or more glass fibers, one or more metal fibers, one or more carbon fibers, or combinations thereof.

For example, the one or more metal fibers are selected from metal cords, metal wires and metal strands. For example, the one or more metal fibers are steel wires or steel cords. According to an embodiment, the continuous fiber is or comprises a steel wire having a diameter ranging from 140 to 400 µm, preferably from 150 to 200 µm.

For example, the one or more glass fibers are or comprise glass yarn. An example of commercially available glass yarn suitable to be used in the invention is EC 9 - 136 S 28 B3/4J or EC 9 - 136 Z 28 B3/4J, both with a diameter of 9 µm as determined according to ISO 1888. According to an embodiment, the continuous fiber is or comprises a glass yarn having a diameter ranging from 5 to 20 µm, preferably from 5 to 10 µm as determined according to ISO 1888.

According to an embodiment, the continuous fiber is or comprises continuous carbon fibers yarn having a diameter ranging from 5 to 10 µm. Thus, in an embodiment of the invention, the continuous fiber has a diameter ranging from 5 to 10 µm and is selected from a carbon fiber or a glass yarn.

According to an embodiment of the invention, the one or more thermoplastic fibers are made of a polymer that is different from the first thermoplastic resin and that has a melting point above 300°C according to ISO 3146:2000, wherein the polymer is selected from one or more of polyetherimide, polyether ether ketone, or combinations thereof.

For example, the one or more thermoplastic fibers made of a polymer having a melting point above 300°C according to ISO 3146:2000 are or comprise one or more polyether ether ketones. The polyether ether ketone (PEEK) has a melting point of about 343°C. The melting point is determined according to ISO 3146:2000.

For example, the one or more thermoplastic fibers made of a polymer having a melting point above 300°C according to ISO 3146:2000 are or comprise one or more polyetherimides (CAS 61128-46-9). The polyetherimide (PEI) has a melting point ranging from 340 to 360°C. The melting point is determined according to ISO 3146:2000. Non-limiting examples of suitable PEI filaments that can be used in the context of the disclosure are commercially available under the denomination of ULTEM^{™} FILAMENT.

It is understood that, when used as reinforcing material, the one or more thermoplastic fibers made of a polymer having a melting point above 300°C according to ISO 3146:2000 do not melt during the 3D-printing step.

Thus, the first thermoplastic resin and the polymer having a melting point above 300°C are different and have different melting points according to ISO 3146:2000 by at least 20°C, preferably at least 30°C, more preferably at least 40°C, even more preferably at least 50°C and most preferably at least 60°C, or at least 70°C. In all cases, the polymer used in the one or more thermoplastic fibers has a melting point higher than the melting point of the first thermoplastic resin.

For example, the continuous fiber can be polyether ether ketone and the first thermoplastic resin can be thermoplastic polyurethane. In such a case the difference between the respective melting points is more than 50°C.

The first thermoplastic resin of the first plastic composition can be any thermoplastic resin suitable for 3D printing, with the provision that it is different from the polymer used in the one or more thermoplastic fibers if applicable (so that they have different melting points). For example, the first thermoplastic resin of the first plastic composition comprises a polymer selected from the group of polyoxymethylene, acrylonitrile butadiene styrene, polyamide, polyether ether ketone, cellulose acetate, cellulose acetate propionate, polylactic acid, polyethylene terephthalate, polyethylene terephthalate glycol, polymethylmethacrylate, polypropylene, polystyrene, polyvinyl chloride, polychloroethene, polyester resin, polycarbonate, thermoplastic polyurethane, polyether sulfone, poly(vinyl alcohol), polyphenyl sulfone, polyether imide, polyethylene, or combinations thereof.

In an embodiment, the first thermoplastic resin is selected from polyether ether ketone, polysulfone, polyether sulfone, polyether imide, polyamide, polybutylene terephthalate, polyethylene, polycarbonate, thermoplastic polyurethane, or combinations thereof. For example, the first thermoplastic resin is or comprises one of polyamide, thermoplastic polyurethane, or combinations thereof. For example, the first thermoplastic resin is or comprises one or more polyamides selected from Nylon-6, Nylon-6,6, Nylon-6,9, Nylon-6,10, Nylon-6,12, Nylon-11, Nylon-4,6 and Nylon-66/6 copolymer.

Examples of suitable nylon filaments that can be used in the context of the disclosure are commercially available under the denomination PolyMide^{™} CoPA. Non-limiting examples of suitable polyether imide filaments that can be used in the context of the disclosure are commercially available under the denomination of ULTEM^{™} FILAMENT. A non-limiting example of a material suitable for thermoplastic polyurethane filaments that can be used in the context of the disclosure is for instance polyether based TPU commercially available under the denomination of Elastollan ^{®} 1195A.

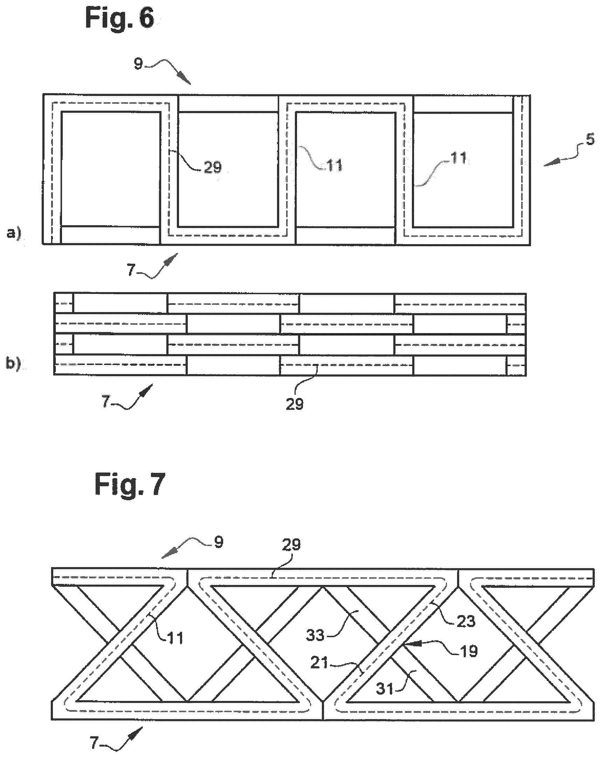

In embodiments in which the one or more layers of the first plastic composition extend from at least one spoke to the inner band, or from at least one spoke to the outer band, or from at least one spoke to both the inner band and the outer band, or from one spoke to one or more other spokes, and in embodiments in which the at least one spoke of said plurality of spokes has a branched shape, the continuous fiber is preferably not interrupted. As a consequence, in a specific layer, the first plastic composition comprising the continuous fiber cannot necessarily pass everywhere without generating occasional extra thicknesses. In such a specific layer, where the bypassed areas are not covered by the deposit of the first plastic composition, those can be supplemented by a deposit of a second plastic composition on an intermittent print mode as illustrated in FIGS. 6 and 7.

In such a configuration, the production process further comprises the steps of:
- providing a second plastic composition selected from an unreinforced plastic, a short-fibers reinforced thermoplastic resin, a long-fibers reinforced thermoplastic resin, or a fiber reinforced thermoplastic resin, and
- forming a plurality of spokes, the inner band and the outer band of the non-pneumatic tire structure by 3D printing, wherein forming includes depositing layers from the first plastic composition and, for each layer, completing the layer of the first plastic composition by depositing the second plastic composition in the bypassed areas where the first composition has not been deposited.

FIGS. 6a and 6b illustrate a U-shaped layout to print a spoke part. In FIG. 6a, the spokes 11 are straight but could be curved or double-curved. The spoke-direction can be perpendicular to the radial direction, or with a fixed angle, or with varying angles, with respect to the radial direction. The spoke-direction can also have a fixed, or varying angle with the axial direction. It is understood that, in such a U-shaped layout configuration, at least two spokes are printed together using a single continuous filament 29 (shown in dotted lines) of the first plastic composition to be integral. The spokes 11 are produced by successive layers stacked in the axial direction. FIG. 6b is a view of the inner band 7. The layers comprise different layer portions, namely first layer portions and second layer portions. The successive layers are made of the first plastic composition that comprises the continuous fiber 29. The first plastic composition forms the first layer portion. The inner band and the outer band comprise along their circumferential direction alternated portions made of the first plastic composition (comprising the continuous reinforcement fiber) and the second plastic composition. The second plastic composition forms the second layer portion. The second layer portion fills the bypassed areas. So, the first plastic composition extends from at least one spoke to the inner band and the outer band. In the axial direction, a similar alternated pattern is visible with the alternation of layers of the first and second plastic composition. The alternated pattern of the first and second plastic composition in both the circumferential and axial direction provides a checkerboard pattern to the inner band and/or to the outer band. Thus, the pattern can be considered as a checkerboard pattern. It exhibits a first meshing formed by the first plastic composition and a second meshing formed by the second plastic composition, said first and second meshings being interlocked in one another.

For example, the orientation of the spokes in the U-shaped layout versus the radial direction can be perpendicular, or in an fixed angle, or with varying angles; and/or the orientation of the spokes in the U-shaped layout can be in a fixed, or varying, angle(s) with the axial direction.

Thus, in an embodiment in which the spokes have a straight shape, a curved shape, a double-curved shape, or any combination thereof, the bypassed areas completed by the second plastic composition are located at least on the inner band or the outer band or both the inner band and the outer band, so that at least one of the inner band and the outer band have alternated layers of the first plastic composition and the second plastic composition. With preference, at least one selected from the inner band and the outer band comprises the first and the second thermoplastic compositions deposited to show a checkerboard pattern.

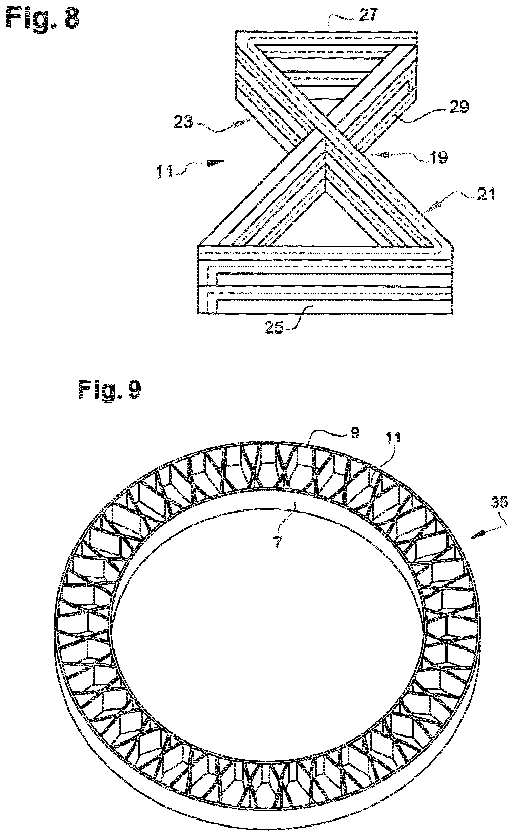

FIG. 7 illustrates a crossing layout wherein the spokes have a branched shape, such as an X-shape. In such a configuration, the inner band and the outer band may be produced by successive layers, in the axial direction, of the first plastic composition. Each spoke comprises a knot section 19 and a plurality of webs 21, 23, in this case, two inner webs 21 and two outer webs 23. In a specific layer, one of the inner webs and one of the outer webs are integral and made from the first plastic composition, whereas the other inner web 31 and the other outer web 33 are made from the second plastic composition. As a consequence, and as illustrated in FIG. 8 in connection with a single spoke, the webs have alternating layers of the first plastic composition and of the second plastic composition.

Thus, in an embodiment, the spokes have a branched shape, wherein said branched shape has a knot section and a plurality of webs. At least one web of the plurality of webs extends from said knot section towards the inner band and at least two webs of the plurality of webs extend from said knot section towards the outer band. The areas completed by the second plastic composition are located at least on one web so that at least one web of the plurality of webs has alternating layers of the first plastic composition and the second plastic composition. For example, the process further comprises interrupting the deposit of the second plastic composition at the knot section so that the knot section is formed from layers of the first plastic composition only. For example, in the one or more webs comprising alternated layers, the alternated layers overlap in the axial direction of the non-pneumatic tire structure. For example, each web of the plurality of webs has a straight shape or a curved shape or a double-curved shape.

The second plastic composition comprises a second thermoplastic resin and is preferably selected from an unreinforced thermoplastic resin, a short-fibers reinforced thermoplastic resin, a long-fibers reinforced thermoplastic resin, or a fiber reinforced thermoplastic resin.

In an embodiment, the second thermoplastic resin of the second plastic composition can be any thermoplastic resin suitable for 3D printing. For example, the second thermoplastic resin of the first plastic composition comprises a polymer selected from the group comprising polyoxymethylene, acrylonitrile butadiene styrene, polyamide, polyether ether ketone, cellulose acetate, cellulose acetate propionate, polylactic acid, polyethylene terephthalate, polyethylene terephthalate glycol, polymethylmethacrylate, polypropylene, polystyrene, polyvinyl chloride, polychloroethene, polyester resin, polycarbonate, thermoplastic polyurethane, polyether sulfone, poly(vinyl alcohol), polyphenyl sulfone, polyether imide, polyethylene, or combinations thereof.

In a preferred embodiment, the first and the second thermoplastic resins are the same or at least of the same nature or type.

In an embodiment, the short fibers and/or the long-fibers are selected from carbon fibers, glass fibers, or any combination thereof. With preference, short fibers and/or the long-fibers are carbon fibers. Non-limiting examples of suitable reinforced PEEK filaments that can be used in the context of the disclosure are commercially available under the denomination of CarbonX^{™} CF-PEEK.

The invention also encompasses the individual production of branched spokes in the same way. For example, the invention further provides a process for the production of a branched spoke of a non-pneumatic tire structure, wherein the spoke is intended to be placed between the inner band and the outer band, wherein the spoke has a branched shape, said branched shape having a knot section and a plurality of webs, wherein at least one web of the plurality of webs extends from said knot section towards the inner band, and at least two webs of the plurality of webs extend from said knot section towards the outer band. The process comprises the steps of:
- providing a first plastic composition in the form of a filament comprising a continuous fiber coated with a first thermoplastic resin,
- providing a second plastic composition selected from an unreinforced plastic, a short-fibers reinforced thermoplastic resin, a long-fibers reinforced thermoplastic resin or a fiber reinforced thermoplastic resin, and
- forming the spoke of the non-pneumatic tire structure by 3D printing including depositing layers from the plastic compositions wherein forming includes depositing layers from the first plastic composition and wherein depositing comprises defining bypassed areas which are bypassed by the first plastic composition deposition, for each layer, filling the layer of the first plastic composition by depositing the second plastic composition in the bypassed areas where the first composition has not been deposited, and wherein the bypassed areas completed by the second plastic composition are located at least on one web so that at least one web of the plurality of webs has alternating layers of the first plastic composition and of the second plastic composition.

The different features described for the process for production of at least a part of a non-pneumatic tire structure may apply to the process of production of the spokes. The different features described for the process for production of at least a part of a non-pneumatic tire structure may apply to the process of production of a spoked ring as illustrated in FIG. 9. The spoked ring 35 comprises an inner band, an outer band surrounding the inner band and a spoke part comprising a plurality of spokes extending between the inner band and the outer band. In FIG. 9, the spokes are X-shaped, but the spoked ring may comprise spokes of another shape. Also the disclosure further encompasses parts of the spoked ring.

For example, the branched spoke is X-shaped and comprises an inner link joining the ends of the inner webs and an outer link joining the ends of the outer webs, or the branched spoke is Y-shaped and comprises an outer link joining the ends of the outer webs.

For example, the thermoplastic resin of the first plastic composition and of the second plastic composition comprises the same polymer, wherein the polymer is selected from the group comprising polyoxymethylene, acrylonitrile butadiene styrene, polyamide, polyether ether ketone, cellulose acetate, cellulose acetate propionate, polylactic acid, polyethylene terephthalate, polyethylene terephthalate glycol, polymethylmethacrylate, polypropylene, polystyrene, polyvinyl chloride, polychloroethene, polyester resin, polycarbonate, thermoplastic polyurethane, polyether sulfone, poly(vinyl alcohol), polyphenyl sulfone, polyetherimide, polyethylene, or combinations thereof.

For example, the second plastic composition is an unreinforced plastic and both the first and the second thermoplastic resins are the same and are selected from polyether ether ketone, polysulfone, polyether sulfone, polyether imide, polyamide, polybutylene terephthalate, polyethylene, polycarbonate, thermoplastic polyurethane, or combinations thereof. In addition, the continuous fiber is selected from a glass yarn or a carbon fiber.

### Examples

X-shaped spokes have been produced by 3D printing according to an embodiment of the process of the invention. The first and second thermoplastic resins were a polyether-based TPU commercially available under the denomination of Elastollan^{®} 1195A. The continuous fiber was the glass yarn EC 9 - 136 S 28 B3/4J which had a 9 µm diameter.

The X-shaped spokes comprised an inner link joining the ends of the inner webs and an outer link joining the end of the outer webs.

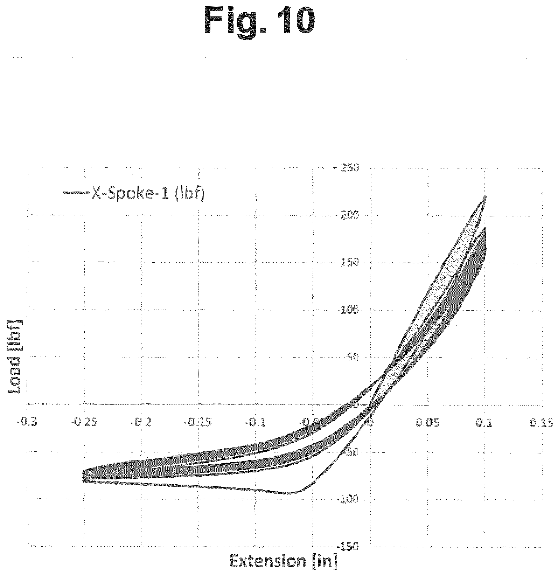

Dynamic crush tests have been performed for which results have been provided in FIG. 10.

For the Dynamic Crush Test, the X-spoke sample was fixed between a piston (bottom) and a load-cell (top), wherein the load cell was geometrically fixed.

The piston was displaced in a vertical direction with a defined displacement range during a defined time per cycle (42.12 s/cycle), and the resulting force-changes were measured by the load cell.

Fifteen such cycles have been performed with a relative velocity of 0.0166 inch/second (~0.42 mm/s), for a total displacement of 0.70 inch (~17.8 mm) per cycle.

Under these parameters, after a first break-in cycle, a relatively elastic response of the 3D-printed continuous-fiber-reinforced X-spoke sample could be demonstrated.

## Claims

1. A process for the production of at least a part of a non-pneumatic tire structure, the non-pneumatic tire structure (1) comprising a radially inner band (7), a radially outer band (9) surrounding the inner band (7) and a spoke part (5) comprising a plurality of spokes (11) extending between the inner band (7) and the outer band (9), **characterized in that** the process comprises
- providing a first plastic composition in the form of a filament (29) comprising a continuous fiber coated with a first thermoplastic resin; and
- forming one or more selected from at least one spoke (11) of the plurality of spokes, the inner band (7) and the outer band (9) of the non-pneumatic tire structure (1) by 3D printing, wherein forming includes depositing one or more layers of the first plastic composition.

2. The process of claim 1 wherein the one or more layers of the first plastic composition extend from at least one spoke (11) of the plurality of spokes to the inner band (7) or the outer band (9), or from the inner band (7) to at least one spoke (11) of the plurality of spokes or from the outer band (9) to at least one spoke (11) of the plurality of spokes, or within two different spokes (11) of the plurality of spokes.

3. The process of claim 1 or 2 wherein (a) the first thermoplastic resin of the first plastic composition comprises a polymer selected from the group comprising polyoxymethylene, acrylonitrile butadiene styrene, polyamide, polyether ether ketone, cellulose acetate, cellulose acetate propionate, polylactic acid, polyethylene terephthalate, polyethylene terephthalate glycol, polymethylmethacrylate, polypropylene, polystyrene, polyvinyl chloride, polychloroethene, polyester resin, polycarbonate, thermoplastic polyurethane, polyether sulfone, poly(vinyl alcohol), polyphenyl sulfone, polyetherimide, polyethylene, or combinations thereof; and/or wherein (b) the continuous fiber of the first plastic composition is selected from one or more glass fibers, one or more metallic fibers, one or more carbon fibers, one or more thermoplastic polymers fibers having a melting point above 300°C according to ISO 3146:2000, or combinations thereof; wherein the one or more thermoplastic polymers fibers having a melting point above 300°C according to ISO 3146:2000, if any, have a melting point according to ISO 3146:2000 that is higher than the melting point of the first thermoplastic resin by at least 20°C.

4. The process of at least one of the previous claims, wherein the first thermoplastic resin of the first plastic composition is or comprises polyamide, thermoplastic polyurethane, or combinations thereof; and/or wherein the continuous fiber of the first plastic composition has a diameter ranging from 5 to 10 µm and is preferably selected from a carbon fiber or a glass yarn.

5. The process of at least one of the previous claims, wherein forming a plurality of spokes (11) comprises defining a bypassed area in the layer of the first plastic composition, the process further comprising:
- providing a second plastic composition selected from an unreinforced plastic, a short-fibers reinforced thermoplastic resin, or a long-fibers reinforced thermoplastic resin, and
- filling the bypassed area by depositing the second plastic composition in said bypassed area.

6. The process of claim 5, wherein one or more spokes of the plurality of spokes have a branched shape, said branched shape having a knot section (19) and a plurality of webs (21, 23), the plurality of webs (21, 23) comprising at least one inner web extending from said knot section (19) towards the inner band (7), and at least two outer webs extending from said knot section (19) towards the outer band (9), and wherein the areas bypassed by the first plastic composition and filled by the second plastic composition are located at least on one web (21, 23) so that at least one web (21, 23) of the plurality of webs has alternating layers of the first plastic composition and the second plastic composition, and, optionally, wherein the process further comprises interrupting the deposit of the second plastic composition at the knot section (19) so that the knot section (19) is formed from layers of the first plastic composition which are touching one another.

7. The process of claim 6 wherein the alternating layers overlap in an axial direction of the non-pneumatic tire structure (1) or wherein each web (21, 23) of the plurality of webs has one of a straight shape, a curved shape, and a double-curved shape.

8. The process of at least one of the previous claims, wherein the spokes (11) have a straight shape, a curved shape, or a double-curved shape or any combination thereof; and wherein the bypassed areas filled by the second plastic composition are located at least on the inner band (7) or the outer band (9) or both the inner band and the outer band, so that at least one of the inner band (7) or the outer band (9) has alternating layers of the first plastic composition and the second plastic composition.

9. The process of at least one of the previous claims wherein at least one selected from the inner band (7) and the outer band (9) comprises the first and the second thermoplastic compositions deposited so as to exhibit a checkerboard pattern.

10. The process of at least one of the previous claims wherein the first plastic composition is formed in situ so that the step of providing a first plastic composition in the form of a filament comprises:
- providing a 3-D printer with a preferably heated nozzle;
- providing a continuous fiber;
- providing a first thermoplastic resin; and
- coating the continuous fiber with the first thermoplastic material in the nozzle of the 3-D printer to produce a first plastic composition in the form of a filament (29) comprising the continuous fiber coated with the first thermoplastic resin.

11. The process of claim 6 further comprising interrupting the layers of the second plastic composition at the knot section (19) so that the knot section (19) is formed from layers of the first plastic composition.

12. The process of claim 6 or 11 wherein:
(a) the thermoplastic resin of the first plastic composition and of the second plastic composition comprises the same polymer, wherein the polymer is selected from the group comprising polyoxymethylene, acrylonitrile butadiene styrene, polyamide, polyether ether ketone, cellulose acetate, cellulose acetate propionate, polylactic acid, polyethylene terephthalate, polyethylene terephthalate glycol, polymethylmethacrylate, polypropylene, polystyrene, polyvinyl chloride, polychloroethene, polyester resin, polycarbonate, thermoplastic polyurethane, polyether sulfone, poly(vinyl alcohol), polyphenyl sulfone, polyetherimide, polyethylene, or combinations thereof; and/or wherein
(b) the second plastic composition is an unreinforced plastic; the first thermoplastic resin and the second thermoplastic resin are the same and are selected from polyether ether ketone, polysulfone, polyether sulfone, polyether imide, polyamide, polybutylene terephthalate, polyethylene, polycarbonate, thermoplastic polyurethane, or combinations thereof; and the continuous fiber is selected from a glass yarn or a carbon fiber.

13. The process of claim 6, 11 or 12 wherein the branched spoke (11) is one of:
i) X-shaped and comprises an inner link (25) joining the inner ends of the webs (21, 23) of the plurality of webs which are adjacent to the inner band (7), and an outer link (27) joining the outer ends of the webs (21, 23) of the plurality of webs which are adjacent to the outer band (9);
ii) Y-shaped and comprises an outer link (27) joining outer ends of the webs (21, 23) of the plurality of webs which are adjacent to the outer band (9).

## Patentansprüche

1. Verfahren zur Herstellung zumindest eines Elements einer nicht-pneumatischen Reifenstruktur, wobei die nicht-pneumatische Reifenstruktur (1) ein radial inneres Band (7), ein radial äußeres Band (9), das das innere Band (7) umgibt, und ein speichenartiges Element (5) umfasst, das eine oder mehrere Speichen (11) umfasst, die sich zwischen dem inneren Band (7) und dem äußeren Band (9) erstrecken, **dadurch gekennzeichnet, dass** das Verfahren das Folgende umfasst:
- das Bereitstellen einer ersten Kunststoffzusammensetzung in Form eines Filaments (29), das eine Endlosfaser umfasst, die mit einem ersten thermoplastischen Harz beschichtet ist; und
- das Bilden einer oder mehrerer Speichen, der oder die aus mindestens einer Speiche (11) der mehreren Speichen ausgewählt ist, des inneren Bands (7) und des äußeren Bands (9) der nicht-pneumatischen Reifenstruktur (1) durch 3D-Drucken, wobei das Bilden das Aufbringen einer oder mehrerer Schichten der ersten Kunststoffzusammensetzung umfasst.

2. Verfahren nach Anspruch 1, wobei sich die eine oder die mehreren Schichten der ersten Kunststoffzusammensetzung sich von mindestens einer Speiche (11) der einen oder mehreren Speichen bis zu dem inneren Bands (7) oder äußeren Band (9) oder von dem inneren Band (7) zu mindestens einer Speiche (11) der einen oder mehreren Speichen oder von dem äußeren Band (9) zu mindestens einer Speiche (11) der einen oder mehreren Speichen oder innerhalb von zwei verschiedenen Speichen (11) der einen oder mehreren Speichen erstreckt oder erstrecken.

3. Verfahren nach Anspruch 1 oder 2, wobei (a) das erste thermoplastische Harz der ersten Kunststoffzusammensetzung ein Polymer umfasst, das aus der Gruppe ausgewählt ist, die Polyoxymethylen, Acrylnitril-Butadien-Styrol, Polyamid, Polyetheretherketon, Celluloseacetat, Celluloseacetatpropionat, Polymilchsäure, Polyethylenterephthalat, Polyethylenterephthalatglycol, Polymethylmethacrylat, Polypropylen, Polystyrol, Polyvinylchlorid, Polychlorethen, Polyesterharz, Polycarbonat, thermoplastisches Polyurethan, Polyethersulfon, Poly(vinylalkohol), Polyphenylsulfon, Polyetherimid, Polyethylen oder Kombinationen davon, umfasst; und/oder wobei (b) die Endlosfaser der ersten Kunststoffzusammensetzung aus einer oder mehreren Glasfasern, einer oder mehreren Metallfasern, einer oder mehreren Kohlenstofffasern, einer oder mehreren einen Schmelzpunkt über 300 °C gemäß ISO 3146:2000 aufweisenden thermoplastischen Polymerfasern, oder Kombinationen davon, ausgewählt ist; wobei die eine oder mehrere einen Schmelzpunkt über 300 °C gemäß ISO 3146:2000 aufweisende thermoplastische Polymerfasern, falls vorhanden, einen Schmelzpunkt haben, der mindestens 20 °C höher ist als der Schmelzpunkt des ersten thermoplastischen Harzes.

4. Verfahren nach mindestens einem der vorhergehenden Ansprüche, wobei das erste thermoplastische Harz der ersten Kunststoffzusammensetzung Polyamid, thermoplastisches Polyurethan oder Kombinationen davon ist oder umfasst; und/oder wobei die Endlosfaser der ersten Kunststoffzusammensetzung einen Durchmesser in dem Bereich von 5 bis 10 µm aufweist und vorzugsweise aus einer Kohlenstoffaser oder einem Glasgarn ausgewählt ist.

5. Verfahren nach mindestens einem der vorhergehenden Ansprüche, wobei das Ausbilden einer Vielzahl von Speichen (11) das Definieren eines umgangenen Bereichs in der Schicht der ersten Kunststoffzusammensetzung umfasst, wobei das Verfahren ferner Fogendes umfasst:
- das Bereitstellen einer zweiten Kunststoffzusammensetzung, die aus einem unverstärkten Kunststoff, einem kurzfaserverstärkten thermoplastischen Harz oder einem langfaserverstärkten thermoplastischen Harz ausgewählt ist, und
- das Füllen des umgangenen Bereichs durch Ablagern der zweiten Kunststoffzusammensetzung in dem oben genannten umgangenen Bereich.

6. Verfahren nach Anspruch 5, wobei eine oder mehrere Speichen der mehreren Speichen eine verzweigte Form aufweisen, wobei die oben genannte verzweigte Form einen Knotenabschnitt (19) und mehrere Schenkel (21, 23) aufweist, wobei die mehreren Schenkel (21, 23) mindestens einen inneren Schenkel, der sich von dem Knotenabschnitt (19) zu dem inneren Band (7) erstreckt, und mindestens zwei äußere Schenkel, die sich von dem Knotenabschnitt (19) in Richtung des äußeren Bandes (9) erstrecken, und wobei die Bereiche, die von der ersten Kunststoffzusammensetzung umgangen und von der zweiten Kunststoffzusammensetzung gefüllt werden, sich mindestens auf einem Schenkel (21, 23) befinden, so dass mindestens ein Schenkel (21, 23) der einen oder mehreren Schenkeln abwechselnde Schichten der ersten Kunststoffzusammensetzung und der zweiten Kunststoffzusammensetzung aufweist, und optional wobei das Verfahren ferner das Unterbrechen der Ablagerung der zweiten Kunststoffzusammensetzung an dem Knotenabschnitt (19) umfasst, so dass der Knotenabschnitt (19) aus Schichten der ersten Kunststoffzusammensetzung gebildet wird, die einander berühren.

7. Verfahren nach Anspruch 6, wobei die abwechselnden Schichten in einer axialen Richtung der nicht-pneumatischen Reifenstruktur (1) überlappen oder wobei jeder Schenkel (21, 23) der einen oder mehreren Schenkeln eine gerade Form, eine gekrümmte Form oder eine doppelt gekrümmte Form aufweist.

8. Verfahren nach mindestens einem der vorhergehenden Ansprüche, wobei die Speichen (11) eine gerade Form, eine gekrümmte Form oder eine doppelt gekrümmte Form oder eine beliebige Kombination davon aufweisen; und wobei die umgangenen Bereiche, die mit der zweiten Kunststoffzusammensetzung gefüllt sind, sich zumindest auf dem inneren Band (7) oder dem äußeren Band (9) oder sowohl auf dem inneren Band als auch dem äußeren Band befinden, so dass zumindest ein Band von dem inneren Band (7) oder dem äußeren Band (9) abwechselnde Schichten der ersten Kunststoffzusammensetzung und der zweiten Kunststoffzusammensetzung aufweist.

9. Verfahren nach mindestens einem der vorhergehenden Ansprüche, wobei mindestens ein Band, das aus dem inneren Band (7) und dem äußeren Band (9) ausgewählt ist, die erste und die zweite thermoplastische Zusammensetzung umfasst, die so abgeschieden werden, dass sie ein Schachbrettmuster aufweisen.

10. Verfahren nach mindestens einem der vorhergehenden Ansprüche, wobei die erste Kunststoffzusammensetzung in situ gebildet wird, so dass der Schritt, wobei eine erste Kunststoffzusammensetzung in Form eines Filaments bereigestellt wird, das Folgende umfasst:
das Bereitstellen eines 3D-Druckers, der eine vorzugsweise beheizte Düse umfasst;
das Bereitstellen einer Endlosfaser;
das Bereitstellen eines ersten thermoplastischen Harzes; und
das Beschichten der Endlosfaser mit dem ersten thermoplastischen Material in der Düse des 3D-Druckers, um eine erste Kunststoffzusammensetzung in Form eines Filaments (29) herzustellen, das die mit dem ersten thermoplastischen Harz beschichtete Endlosfaser umfasst.

11. Verfahren nach Anspruch 6, das ferner das Unterbrechen der Schichten der zweiten Kunststoffzusammensetzung an dem Knotenabschnitt (19) umfasst, so dass der Knotenabschnitt (19) aus Schichten der ersten Kunststoffzusammensetzung gebildet wird.

12. Verfahren nach Anspruch 6 oder 11, wobei:
(a) das thermoplastische Harz der ersten Kunststoffzusammensetzung und der zweiten Kunststoffzusammensetzung dasselbe Polymer umfasst, wobei das Polymer aus der Gruppe ausgewählt ist, die Polyoxymethylen, Acrylnitril-Butadien-Styrol, Polyamid, Polyetheretherketon, Celluloseacetat, Celluloseacetatpropionat, Polymilchsäure, Polyethylenterephthalat, Polyethylenterephthalatglycol, Polymethylmethacrylat, Polypropylen, Polystyrol, Polyvinylchlorid, Polychlorethen, Polyesterharz, Polycarbonat, thermoplastisches Polyurethan, Polyethersulfon, Poly(vinylalkohol), Polyphenylsulfon, Polyetherimid, Polyethylen oder Kombinationen davon besteht, umfasst; und/oder wobei
(b) die zweite Kunststoffzusammensetzung ein unverstärkter Kunststoff ist; das erste thermoplastische Harz und das zweite thermoplastische Harz gleich sind und aus Polyetheretherketon, Polysulfon, Polyethersulfon, Polyetherimid, Polyamid, Polybutylenterephthalat, Polyethylen, Polycarbonat, thermoplastischem Polyurethan oder Kombinationen davon ausgewählt sind; und die Endlosfaser aus einem Glasgarn oder einer Kohlenstofffaser ausgewählt ist.

13. Verfahren nach Anspruch 6, 11 oder 12, wobei die verzweigte Speiche (11) eine der folgenden ist:
i) eine X-förmige Speiche, die ein inneres Verbindungsglied (25), das die inneren Enden der Schenkel (21, 23) der einen oder mehreren Schenkeln verbindet, die an das innere Band (7) angrenzen, und ein äußeres Verbindungsglied (27), das die äußeren Enden der Schenkel (21, 23) der einen oder mehreren Schenkeln verbindet, die an das äußere Band (9) angrenzen, umfasst;
ii) eine X-förmige Speiche, die ein äußeres Verbindungsglied (27), das die äußeren Enden der Schenkel (21, 23) der einen oder mehreren Schenkeln verbindet, die an das äußere Band (9) angrenzen, umfasst.

## Revendications

1. Procédé destiné à la production d'au moins un élément d'une structure d'un bandage non pneumatique, dans lequel la structure de bandage non pneumatique (1) comprend une bande (7), interne dans la direction radiale, une bande (9), externe dans la direction radiale, qui entoure la bande interne (7), et un élément (5) sous la forme d'un rayon qui comprend un certain nombre de rayons (11) qui s'étendent entre la bande interne (7) et la bande externe (9), **caractérisé en ce que** le procédé comprend le fait de :
- procurer une première composition de matière plastique sous la forme d'un filament (29) qui comprend une fibre continue enduite avec une première résine thermoplastique ; et
- former un ou plusieurs rayons choisis à partir d'au moins un rayon (11) desdits plusieurs rayons, la bande interne (7) et la bande externe (9) de la structure de bandage pneumatique (1) par l'intermédiaire d'une impression en trois dimensions ; dans lequel la formation englobe le fait de déposer une ou plusieurs couches de la première composition de matière plastique.

2. Procédé selon la revendication 1, dans lequel lesdites une ou plusieurs couches de la première composition de matière plastique s'étendent à partir d'au moins un rayon (11) desdits plusieurs rayons jusqu'à la bande interne (7) ou la bande externe (9), ou à partir de la bande interne (7) jusqu'à au moins un rayon (11) desdits plusieurs rayons ou à partir de la bande externe (9) jusqu'à au moins un rayon (11) desdits plusieurs rayons, ou au sein de deux rayons différents (11) desdits plusieurs rayons.

3. Procédé selon la revendication 1 ou 2, dans lequel (a) la première résine thermoplastique de la première composition de matière plastique comprend un polymère qui est choisi parmi le groupe qui comprend du polyoxyméthylène, de l'acrylonitrile butadiène styrène, du polyamide, de la polyétheréthercétone, de l'acétopropionate de cellulose, de l'acide polylactique, du polyéthylène téréphtalate, du polyéthylène téréphtalate glycol, du polyméthylméthacrylate, du polypropylène, du polystyrène, du chlorure de polyvinyle, du polychloroéthène, une résine à base de polyester, un polycarbonate, du polyuréthane thermoplastique, une polyéther sulfone, de l'alcool polyvinylique, de la polyphénylsulfone, un polyétherimide, du polyéthylène, ou leurs combinaisons; et/ou dans lequel (b) la fibre continue de la première composition de matière plastique est choisie parmi une ou plusieurs fibres de verre, une ou plusieurs fibres métalliques, une ou plusieurs fibres à base de carbone, une ou plusieurs fibres à base de polymères thermoplastiques possédant un point de fusion qui est supérieur à 300 °C en conformité avec la norme ISO 3146:2000, ou leurs combinaisons ; dans lequel lesdites une ou plusieurs fibres à base de polymères thermoplastiques, qui possèdent un point de fusion supérieur à 300 °C en conformité avec la norme ISO 3146:2000, si elles sont présentes, possèdent un point de fusion, en conformité avec la norme ISO 3146:2000, qui est supérieur au point de fusion de la première résine thermoplastique à concurrence d'au moins 20 °C.

4. Procédé selon au moins une des revendications précédentes, dans lequel la première résine thermoplastique de la première composition de matière plastique représente ou comprend du polyamide, du polyuréthane thermoplastique, ou leurs combinaisons ; et/ou dans lequel la fibre continue de la première composition de matière plastique possède un diamètre qui se situe dans la plage allant de 5 à 10 µm et est de préférence choisie parmi une fibre de carbone ou un fil de verre.

5. Procédé selon au moins une des revendications précédentes, dans lequel la formation d'un certain nombre de rayons (11) comprend le fait de définir une zone contournée dans la couche de la première composition de matière plastique, le procédé comprenant en outre le fait de :
- procurer une deuxième composition de matière plastique qui est choisie parmi une matière plastique non renforcée, une résine thermoplastique qui est renforcée avec de courtes fibres ou une résine thermoplastique est renforcée avec de longues fibres ; et
- remplir la zone contournée en déposant la deuxième composition de matière plastique dans ladite zone contournée.

6. Procédé selon la revendication 5, dans lequel un ou plusieurs rayons desdits plusieurs rayons possèdent une configuration ramifiée, ladite dans lequel la configuration ramifiée possède une partie (19) formant un nœud et un certain nombre d'éléments de support (21, 23), lesdits plusieurs éléments de support (21, 23) comprenant au moins un élément de support interne qui s'étend à partir de ladite partie (19) formant un nœud en direction de la bande interne (7) et au moins deux éléments de support externes qui s'étendent à partir de ladite partie (19) formant un nœud en direction de la bande externe (9) ; et dans lequel les zones contournées par la première composition de matière plastique et remplies par la deuxième composition de matière plastique sont situées au moins sur un élément de support (21, 23) d'une manière telle qu'au moins un élément de support (21, 23) desdits plusieurs éléments de support possède des couches alternées de la première composition de matière plastique et de la deuxième composition de matière plastique; et, de manière facultative, dans lequel le procédé comprend en outre le fait d'interrompre le dépôt de la deuxième composition de matière plastique à l'endroit occupé par la partie (19) formant un nœud d'une manière telle que l'on obtient la partie (19) formant un nœud à partir de couches de la première composition de matière plastique qui se touchent les unes les autres.

7. Procédé selon la revendication 6, dans lequel les couches alternées se chevauchent dans une direction axiale de la structure de bandage non pneumatique (1) ou dans lequel chaque élément de support (21, 23) desdits plusieurs éléments de support possède une configuration rectiligne, une configuration courbée et une configuration doublement courbée.

8. Procédé selon au moins une des revendications précédentes, dans lequel les rayons (11) possèdent une configuration rectiligne, une configuration courbée et une configuration doublement courbée ou l'une quelconque de leurs combinaisons ; et dans lequel les zones contournées qui sont remplies avec la deuxième composition de matière plastique sont situées au moins sur la bande interne (7) ou la bande externe (9) ou à la fois sur la bande interne et sur la bande externe, d'une manière telle qu'au au moins une bande parmi la bande interne (7) ou la bande externe (9) possède des couches alternées de la première composition de matière plastique et de la deuxième composition de matière plastique.

9. Procédé selon au moins une des revendications précédentes, dans lequel au moins une bande qui est choisie parmi la première la bande interne (7) et la bande externe (9) comprend la première et la deuxième composition thermoplastique qui sont déposées de façon à présenter un motif en forme de damier.

10. Procédé selon au moins une des revendications précédentes, dans lequel la première composition de matière plastique est réalisée in situ d'une manière telle que l'étape au cours de laquelle on procure une première composition de matière plastique sous la forme d'un filament comprend le fait de :
- procurer une imprimante en trois dimensions qui comprend une buse de préférence chauffée ;
- procurer une fibre continue ;
- procurer une première résine thermoplastique ; et
- enduire la fibre continue avec la première matière thermoplastique dans la buse de l'imprimante en trois dimensions afin d'obtenir une première composition de matière plastique sous la forme d'un filament (29) qui comprend la fibre continue qui a été enduite avec la première résine thermoplastique.

11. Procédé selon la revendication 6, qui comprend en outre le fait d'interrompre les couches de la deuxième composition de matière plastique à l'endroit occupé par la partie (19) formant un nœud d'une manière telle que l'on obtient la partie (19) formant un nœud à partir de couches de la première composition de matière plastique.

12. Procédé selon la revendication 6 ou 11, dans lequel :
(a) la résine thermoplastique de la première composition de matière plastique et de la deuxième composition de matière plastique comprend le même polymère ; dans lequel le polymère est choisi parmi le groupe qui comprend du polyoxyméthylène, de l'acrylonitrile butadiène styrène, du polyamide, de la polyétheréthercétone, de l'acétopropionate de cellulose, de l'acide polylactique, du polyéthylène téréphtalate, du polyéthylène téréphtalate glycol, du polyméthylméthacrylate, du polypropylène, du polystyrène, du chlorure de polyvinyle, du polychloroéthène, une résine à base de polyester, un polycarbonate, du polyuréthane thermoplastique, une polyéther sulfone, de l'alcool polyvinylique, de la polyphénylsulfone, un polyétherimide, du polyéthylène, ou leurs combinaisons; et/ou dans lequel
(b) la deuxième composition de matière plastique représente une matière plastique non renforcée; la première résine thermoplastique et la deuxième résine thermoplastique sont les mêmes et sont choisies à partir d'une polyétheréthercétone, d'une polysulfone, d'une polyéther sulfone, du polyétherimide, du polyamide, du polybutylène téréphtalate, du polyéthylène, de polycarbonate, d'un polyuréthane thermoplastique ou de leurs combinaisons ; et la fibre continue est choisie parmi un fil de verre ou une fibre à base de carbone.

13. Procédé selon la revendication 6, 11 ou 12, dans lequel le rayon ramifié (11) représente un rayon qui possède :
i) une configuration en forme de X et qui comprend une liaison interne (25) qui rejoint les extrémités internes des éléments de support (21, 23) desdits plusieurs éléments de support qui sont adjacents à la bande interne (7) et une liaison externe (27) qui rejoint les extrémités externes des éléments de support (21, 23) desdits plusieurs éléments de support qui sont adjacents à la bande externe (9) ;
ii) une configuration en forme de Y et qui comprend une liaison externe (27) qui rejoint les extrémités externes des éléments de support (21, 23) desdits plusieurs éléments de support qui sont adjacents à la bande externe (9).
